# EUROPEAN PATENT APPLICATION

(11) **EP 4 715 674 A1**
(43) Date of publication of application: **25.03.2026**
(21) Application number: 24836130.5
(22) Date of filing: 05.07.2024
(51) Int. Cl.: G06N 3/0475, G06F 16/90, G06N 5/022, G06Q 20/14, G06Q 30/0217, G06Q 50/10

(54) **INFORMATION PROVISION DEVICE, INFORMATION PROVISION METHOD, AND INFORMATION PROVISION PROGRAM**

(30) Priority: 05.07.2023 JP 2023110973; 28.08.2023 JP 2023137940; 28.08.2023 JP 2023138115; 07.09.2023 JP 2023145431; 07.09.2023 JP 2023145464; 07.09.2023 JP 2023145472; 27.09.2023 JP 2023164817
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/024481
(87) International publication number: WO 2025/009618

(57) **Abstract**

An information providing apparatus according to an embodiment includes a collection unit and a generation unit. The collection unit collects a data source provided from a provider satisfying a condition regarding reliability. The generation unit generates a language model generated by learning the collected data source and configured to generate an answer to a prompt input by a user.

## Description

### Field

Embodiments described herein relate generally to an information providing apparatus, an information providing method, and an information providing program. Background

Conventionally, a system that generates, using a generation model, an answer sentence to a question sentence input by a user is known (refer to, for example, Patent Literature 1).

### Citation List

### Patent Literature

Patent Literature 1: JP 2022-503838 A

### Summary

### Technical Problem

In the conventional technique, there is room for improvement in terms of increasing a degree of reliability of provided information.

For example, a system described in Patent Literature 1 generates an answer sentence based on a news article. On the other hand, when a news article is collected from any provider, a degree of reliability of the news article may be low depending on a source of the news article.

The present invention has been made in view of the above-described circumstance, and an object of the present invention is to improve a degree of reliability of provided information.

### Solution to Problem

An information providing apparatus according to an embodiment includes a collection unit and a generation unit. The collection unit collects a data source provided from a provider satisfying a condition regarding reliability. The generation unit generates a language model generated by learning the collected data source and configured to generate an answer to a prompt input by a user.

### Advantageous Effects of Invention

According to an aspect of the embodiments, a degree of reliability of provided information can be increased.

### Brief Description of Drawings

FIG. 1 is a diagram illustrating an outline of an information providing apparatus according to an embodiment.
FIG. 2 is a functional block diagram illustrating a configuration example of the information providing apparatus according to the embodiment.
FIG. 3 is a diagram for description of a change in a data amount.
FIG. 4 is a flowchart for description of a flow of reliability determination processing.
FIG. 5 is a flowchart for description of a flow of pre-training processing.
FIG. 6 is a flowchart for description of a flow of information providing processing.
FIG. 7 is a diagram schematically illustrating an example of a computer hardware configuration functioning as the information providing apparatus.

### Description of Embodiments

Hereinafter, the present invention will be described through embodiments, but the following embodiments do not limit the invention according to the claims. In addition, all combinations of features described in the embodiments are not essential to the solution of the invention.

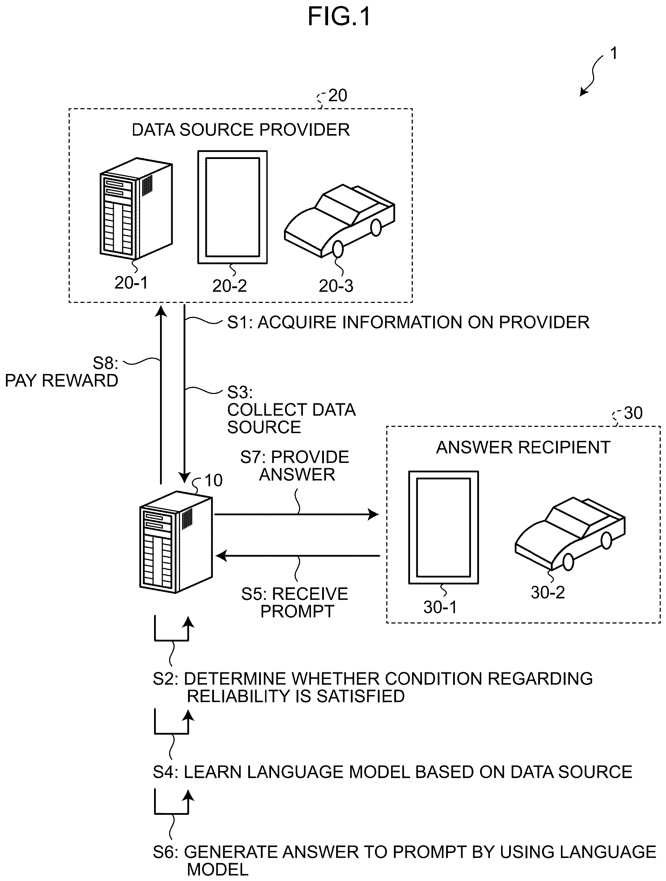

A flow of processing of an information providing apparatus according to an embodiment will be described with reference to FIG. 1. FIG. 1 is a diagram illustrating an outline of the information providing apparatus according to the embodiment. FIG. 1 illustrates a configuration of an information providing system 1 including an information providing apparatus 10 according to the embodiment.

As illustrated in FIG. 1, the information providing system 1 includes the information providing apparatus 10, a data source provider 20, and an answer recipient 30. The entity of the data source provider 20 is a server 20-1 for distributing information, a user terminal 20-2 possessed by a user, a vehicle 20-3 having an automatic driving function, and the like. The server 20-1 is, for example, a server managed by a newspaper company, a communication company, a broadcasting company, a publishing company, a network news provider, or the like. The server 20-1 distributes information via a website or a social networking service (SNS) on the Internet. Furthermore, for example, a total of 1 trillion servers 20-1, user terminals 20-2, and vehicles 20-3 of the data source provider 20 may be provided, and all of them may be connected to the information providing apparatus 10 by plug-in. That is, the information providing apparatus 10 has a function of a brain as a so-called leader, and collects and learns information transmitted from all the chips mounted in the 1 trillion data source providers 20.

The answer recipient 30 is a recipient of an answer to the user's question using a language model included in the information providing apparatus 10. The entity of the answer recipient 30 is a user terminal 30-1, a vehicle 30-2 having an automatic driving function, and the like.

As illustrated in FIG. 1, the information providing apparatus 10 acquires information on a provider from a data source provider 20 (Step S1). The information on a provider includes attribute information (business content, business scale, number of employees, number of registered members) on a recipient, information on a region in which a business is conducted, and the like.

Subsequently, the information providing apparatus 10 determines, based on information on the provider, whether a recipient satisfies a condition regarding reliability (Step S2). For example, the information providing apparatus 10 determines that a condition regarding reliability is satisfied for a provider whose business content is news distribution (newspaper company, communication company, broadcaster, publisher, network news provider). That is, since a data source of a news article provided from a provider whose business content is news distribution has a high degree of reliability, the information providing apparatus 10 determines that the condition regarding reliability is satisfied. Furthermore, the information providing apparatus 10 determines that the condition regarding reliability is satisfied for a provider whose business scale is equal to or larger than a certain scale. The business scale is, for example, the number of distributions of news distribution (the number of copies for a newspaper company, the number of users distributed for a communication company, the viewing rate for a broadcaster, the number of copies for a publisher, the number of distributions or the number of registered users for a network news provider, and the like). That is, the information providing apparatus 10 determines that the condition regarding reliability is satisfied for a provider from which the news article is distributed to a certain number or more of users.

Furthermore, in a case where the data source provider 20 is a device such as the user terminal 20-2 or the vehicle 20-3, the information providing apparatus 10 determines whether a manufacturer of the device satisfies the condition regarding reliability. For example, the information providing apparatus 10 determines that a manufacturer having sales of a certain level or more satisfies the condition regarding reliability.

Subsequently, the information providing apparatus 10 permits a communication connection to the data source provider 20 satisfying the condition regarding reliability, and collects a data source from the data source provider 20 (Step S3). Note that the information providing apparatus 10 and the data source provider 20 are communicably connected to each other by a virtual private network (VPN).

The data source is data in a format such as a text, a voice, or an image distributed by the server 20-1 of the data source provider 20. Furthermore, the data source is a posted content (text, voice, image, and the like) of a user, which is provided by the user terminal 20-2. The data source includes a past travel route provided by the vehicle 20-3, a congestion state of a road and a sidewalk during traveling, travel time required to reach a destination, a behavior (accelerator, brake, steering, and the like) of the vehicle 20-3 during traveling to a destination, and the like.

Furthermore, the data source includes comment data posted by a user (distribution target user) for distribution data. The comment data is, for example, a user's comment on a news article (distribution data).

The information providing apparatus 10 determines a degree of reliability of a collected data source. For example, the information providing apparatus 10 determines the degree of reliability based on information on a provider. Specifically, the information providing apparatus 10 determines the degree of reliability based on attribute information on a provider and the type of a data source. For example, the information providing apparatus 10 determines that the degree of reliability is high in a case where an economic-related data source is provided from a provider who mainly broadcasts economic-related news, and determines that the degree of reliability is low in a case where a data source other than the economic-related data source is provided. Note that a degree of reliability is not limited to a binary of high/low, and may be expressed by a score of 10 levels from 1 to 10. Furthermore, the information providing apparatus 10 may determine that a data source provided from a provider whose business scale is a certain level or more has a high degree of reliability. The business scale is, for example, the number of distributions of news distribution (the number of copies for a newspaper company, the number of users distributed for a communication company, the viewing rate for a broadcaster, the number of copies for a publisher, the number of distributions or the number of registered users for a network news provider, and the like). Furthermore, the information providing apparatus 10 may determine, based on a degree of reliability of a data source provided in the past from the provider, a degree of reliability of a data source provided this time. Specifically, in a case where the degree of reliability of all the data sources provided in the past from the provider is high, the information providing apparatus 10 determines that the degree of reliability of the data source provided this time is high. Furthermore, in a case where a degree of reliability of all the data sources in a specific field among the data sources provided from the provider in the past is high, the information providing apparatus 10 determines that the degree of reliability is high in a case where the data source provided this time is in the specific field.

The information providing apparatus 10 learns a model based on the acquired data source. The model is a language model. As a language model, for example, ChatGPT from OpenAI is known (reference literature: https://openai.com/blog/chatgpt). The language model may be a generation model such as generative adversarial networks (GAN) or variational autoencoder (VAE) using a neural network.

In the present embodiment, the language model generates a text of an answer to a text (hereinafter referred to as a prompt) of a query input by a user. In addition, the model is learned in advance by using the data source. The learning of the model may be performed by a known machine learning method.

This allows the model to generate answers based on the data sources. For example, if a prompt includes a keyword "electric vehicle", the model can generate an answer based on a news article associated with the keyword. In other words, the learning causes contents of the news article to affect generation of the answer by the model.

In Step S1, the information providing apparatus 10 continuously acquires data source. Therefore, the number of data sources acquired by the information providing apparatus 10 increases as time elapses.

The information providing apparatus 10 has two models in which data sources used for learning are different from each other. The two models include a standard model and an advanced model.

The information providing apparatus 10 learns two language models based on the data sources (Step S4). Specifically, the information providing apparatus 10 learns the standard model based on the past data source. Furthermore, the information providing apparatus 10 learns the advanced model based on the current data source.

Here, the past data source is a data source acquired up to a past time point only for a certain period of time at which model learning is performed. For example, assuming that the certain period is 2 years, in a case where learning is performed at "2023/6/22 16:05", the past data source is a data source acquired from an acquisition start time point of the data source to "2021/6/22 16:05".

On the other hand, the current data source is a data source acquired by a timing at which model learning is performed. For example, when learning is performed at "2023/6/22 16:05", the current data source is a data source acquired from the acquisition start time point of the data source to "2023/6/22 16:05".

That is, the information providing apparatus 10 generates a standard model in which past data sources acquired up to a time point going back by a predetermined period are learned and an advanced model in which past data sources acquired up to the present including the predetermined period are learned.

The timing at which the model is learned may be every second or may be every shorter time (for example, every nanosecond).

Furthermore, when learning the advanced model, the information providing apparatus 10 learns data source acquired during a predetermined period of time using data source in which the determined degree of reliability satisfies a predetermined condition. Specifically, the information providing apparatus 10 learns the advanced model using a data source having a high degree of reliability. As a result, the information providing apparatus can learn an advanced model having a high degree of reliability while reducing a learning amount.

Furthermore, the information providing apparatus 10 receives, from a user who is a recipient of an answer, designation of a provider prohibited from being adopted for learning of the language model, learns a data source of a provider other than the designated provider, and generates a language model for each user.

For example, when receiving, from the user, designation of prohibiting a data source of a company A from being used for learning, the information providing apparatus 10 learns a data source of a provider other than the company A. As a result, the generated language model is a language model dedicated to a user whose designation has been accepted. That is, when the user inputs a prompt, the prompt is input into the language model dedicated to the user to generate an answer. As a result, the answer generated from the language model can be made without including a data source of a provider prohibited by the user. As a result, for example, it is possible to provide an answer that does not include a data source from a provider that does not match the preference of a user or a data source from a provider whose data source is not trusted by a user. That is, according to the information providing apparatus 10 of the embodiment, it is possible to provide appropriate information tailored to a user (customer).

Note that the information providing apparatus 10 may set, as a condition for generating such a language model for each user, whether a user subscribes to a premium plan to be described later as a condition. That is, the information providing apparatus 10 may generate the dedicated language model for the user who has subscribed to the premium plan, and may not generate the dedicated language model for a user who has subscribed to a freemium plan (user who may use a language model common to users).

Furthermore, when performing learning of the language model common to users, the information providing apparatus 10 may adjust, based on a reception result of designation, which is received from the user, of a provider prohibited from being adopted for learning of the language model, a learning amount for each provider in the language model for providing an answer to the user who has subscribed to the freemium plan.

For example, regarding a provider having a large number of users (the number of users) who have designated the provider as a prohibited provider for learning of the language model, the information providing apparatus 10 reduces the learning amount when learning the data source provided by the provider in the language model common to users. On the other hand, regarding a provider having a small number of users (the number of users) who have designated the provider as a prohibited provider for learning of the language model, the information providing apparatus 10 increases the learning amount when learning the data source provided by the provider in the language model common to users. Note that, as the learning amount, for example, an amount corresponding to a designated number (the number of users) may be determined. Furthermore, the information providing apparatus 10 may prohibit a provider whose designated number (the number of users) is equal to or greater than a predetermined number from being adopted for learning of the language model. Furthermore, the information providing apparatus 10 may exclude (cancel the contract as a provider), from a data source recipient, a provider whose designated number (the number of users) is equal to or greater than a predetermined number.

That is, as the number of designations of prohibiting a provider from being adopted for learning of the language model is larger, the information providing apparatus 10 determines that a degree of reliability of a provider, receiving from a user, is low and reduces a learning amount. Conversely, as the number of designations of prohibiting a provider from being adopted for learning of the language model is smaller, the information providing apparatus determines that a degree of reliability of a provider, receiving from a user, is high and increases a learning amount. In this manner, by performing learning of the language model common to the users using a reception result of the designation of a provider prohibited from being adopted for learning of the language model, it is possible to increase a degree of reliability of an answer provided by the language model. That is, according to the information providing apparatus 10 of the embodiment, it is possible to provide information having a higher degree of reliability to a user.

Furthermore, the information providing apparatus 10 adjusts, based on a use situation of a user with respect to a service provided by a provider, a learning amount for each provider in a language model. Specifically, the information providing apparatus 10 adjusts the learning amount for each provider in the language model, based on the number of users registered in the service, the number of times of use of the service, and the use frequency (time or number of times). For example, the information providing apparatus 10 makes a learning amount of a data source provided by a provider having a large number of users registered in the service, a large number of times of use of the service, and a high frequency of use of the service larger than a learning amount of data sources provided by other providers. Note that the learning amount may be determined according to the number of users registered in the service, the number of times of use of the service, and the frequency of use of the service. That is, as a use situation of a service of a provider is better, the information providing apparatus 10 determines that a degree of reliability of a data source provided by the provider is higher and increases a learning amount. As a result, a degree of reliability of an answer provided by the language model can be increased. That is, according to the information providing apparatus 10 of the embodiment, it is possible to provide information having a higher degree of reliability to a user.

In addition, the information providing apparatus 10 uses distribution data included in the data source and comment data for model learning. Since the comment data may include supplementary information of the distribution data, more detailed information, information from another viewpoint, and the like, accuracy of the answer output from the model can be further improved by using such comment data for learning.

Furthermore, the information providing apparatus 10 learns a model based on a comment (positive comment) having a positive content and a comment (negative comment) having a negative content in the comment data. The comment having a positive content is a comment that praises, approves, affirms, or supplements distribution data. The comment having a negative content is a comment that criticizes, opposes, or denies distribution data, a comment including radical words, or a comment having a discriminatory content.

For example, the information providing apparatus 10 prohibits, among the comment data, the use of the negative comment in the model learning. As a result, since an answer based on the negative comment can be prevented from being output from the model, it is possible to reduce discomfort felt by the user who receives the answer.

Furthermore, in a case where the number of comments in comment data is equal to or greater than a threshold value, the information providing apparatus 10 uses the comment data for learning of the model. That is, the information providing apparatus 10 determines, for each distribution data, whether the number of comments on comment data is equal to or greater than a threshold value, and uses the distribution data and the comment data for learning of the model in a case where the number of comments is equal to or greater than the threshold value. Conversely, the information providing apparatus uses only the distribution data for learning in a case where the number of comments is less than the threshold value. As a result, it is possible to avoid a situation in which diversity of comments cannot be secured due to a small number of comments.

Furthermore, the information providing apparatus 10 adjusts the learning amount for the model based on the number of positive comments and the number of negative comments in the number of comments. For example, in a case where the ratio of the negative comment among all the comments in the comment data is equal to or greater than a threshold value, the information providing apparatus 10 prohibits the use of all the comments or the negative comment for learning of the model.

In addition, the information providing apparatus 10 makes the learning amount of distribution data in which, among all the comments in the comment data, the ratio of the positive comment is higher than the ratio of the negative comment larger than that of distribution data in which, among all the comments in the comment data, the ratio of the positive comment is lower than the ratio of the negative comment. For example, in the case of distribution data in which the ratio of the positive comment is lower than the ratio of the negative comment, the information providing apparatus 10 does not use a content related to the negative comment in the distribution data for learning of the model.

In addition, the information providing apparatus 10 excludes, from a collection target of the data source, a provider in which the number of distribution data, the comment including the negative content of which is equal to or greater than a threshold value, is equal to or greater than a predetermined number. As a result, since it is possible to exclude a provider who distributes many distribution data including many negative comments, in other words, a provider who distributes distribution data having low reliability, from a collection target of the data source, it is possible to improve the reliability of the data source to be collected.

Here, the information providing apparatus 10 receives a prompt as an input to the language model from the user (Step S5). Then, the information providing apparatus 10 generates an answer to the prompt by using the model according to the plan of the user (Step S6).

Note that the prompt from the user is transmitted to the information providing apparatus 10 via the answer recipient 30. Furthermore, the information providing apparatus 10 transmits the answer to the answer recipient 30.

The information providing apparatus 10 provides an answer as a service. It is assumed that the service has an upper premium plan and a lower freemium plan. The premium plan is a subscription that requires a certain fee for each certain period (for example, year or month) or a metered plan in which a fee is determined according to a usage fee. In addition, the freemium plan is a free plan. The freemium plan may be replaced with a plan (for example, a basic plan) having a lower price than that of the premium plan.

The information providing apparatus 10 realizes differentiation of service quality for each plan by a difference in data used for learning of a model to be used. That is, in a case where the user subscribes to the premium plan, the information providing apparatus 10 generates an answer using an advanced model. On the other hand, in a case where the user subscribes to the freemium plan, the information providing apparatus 10 generates an answer using a standard model.

The information providing apparatus 10 provides the generated answer to the user (Step S7). The information providing apparatus 10 may receive a prompt and provide an answer via a user interface in a chat format. Furthermore, in a case where the answer recipient 30 is the vehicle 30-2, the information providing apparatus 10 displays the answer on, for example, a display (for example, a navigation device or the like) mounted on the vehicle 30-2. Alternatively, in a case where the prompt is an automatic driving request to a destination, the information providing apparatus 10 controls a control device of the vehicle 30-2 to perform automatic driving.

Furthermore, in a case where the user subscribes to the premium plan, the information providing apparatus 10 may update the advanced model based on the latest data source and may further generate an answer. The advanced model updated in this manner is referred to as a real-time model. The information providing apparatus 10 may provide an additional answer generated using the real-time model.

The information providing apparatus 10 continuously acquires the data source and updates the language model even during a period until an answer is generated and the generated answer is provided. The information providing apparatus 10 can generate an answer reflecting a difference generated during this period by using the real-time model.

Subsequently, in a case where the answer related to the data source is provided to the user, the information providing apparatus 10 pays a reward to the data source provider 20 of the data source (Step S8). For example, the information providing apparatus 10 determines a content of the reward to be paid according to the number of times (or the number of users) that answers related to the data source have been made. Furthermore, the information providing apparatus 10 may make a reward different between provision by the standard model and provision by the advanced model. For example, the information providing apparatus 10 makes a reward in a case where the answer related to the data source is provided via the advanced model larger than a reward in a case where the answer is provided via the standard model.

In addition, the information providing apparatus 10 pays a reward according to the degree of reliability determined in Step S4. For example, the information providing apparatus 10 pays more reward as the degree of reliability is higher. Furthermore, the information providing apparatus 10 may determine a reward to be paid based on the degree of reliability of a plurality of data sources provided to the user in the past. Specifically, the information providing apparatus 10 pays more reward as there are more data sources having a higher degree of reliability in the data sources provided within the past predetermined period. As described above, according to the information providing apparatus 10 of the embodiment, by providing a reward according to a degree of reliability to a provider, an appropriate reward can be paid to the provider.

As described above, the information providing apparatus 10 collects the data sources only from the data source provider 20 satisfying a condition regarding reliability, and thus, it is possible to avoid a situation in which data source having a low degree of reliability is mixed in learning of a language model, and thus, it is possible to increase a degree of reliability of provided information.

Further, in the information providing system 1, semiconductor chips manufactured by the same manufacturer are incorporated into the information providing apparatus 10 and the data source provider 20 (the server 20-1, the user Terminal 20-2, and the vehicle 20-3). Each of the semiconductor chips may perform machine learning or deep learning.

In addition, as the semiconductor chip used in the information providing apparatus 10 and the data source provider 20, a chip having a size suitable for each housing is used. For example, in a case where the chip size of the information providing apparatus 10 is assumed to be the XL size, the L size is used for the server 20-1 and the vehicle 20-3, and the S or the M size is used for the user terminal 20-2. In addition, a chip having the SS size is used for the data source provider 20, the housing size of which is smaller than that of the user terminal 20-2, and the chip is integrated into one chip in a system on a chip (SoC). In the XL size, the number of semiconductor chips is 200 tiles, the L size is 50 tiles, the M size is 20 tiles, the S size is 10 tiles, and the SS size is 2 tiles, but the number of tiles of each size is an example and is not limited to the above example. If it is desired to attach an accessory such as a camera or a microphone to the user terminal 20-2, a chip dedicated to an accessory other than a semiconductor chip may be set in a vacant space near the semiconductor chip in the SoC.

As described above, since a closed system can be established between the information providing apparatus 10 and the data source provider 20 by a manufacturer using the same semiconductor chip in the information providing apparatus 10 and the data source provider 20, it is possible to maintain a secure state between the information providing apparatus 10 and the data source provider 20. That is, it is possible to avoid hacking, viral infection, and deep fake with high accuracy between the information providing apparatus 10 and the data source provider 20, and it is possible to secure privacy between the information providing apparatus 10 and the data source provider 20.

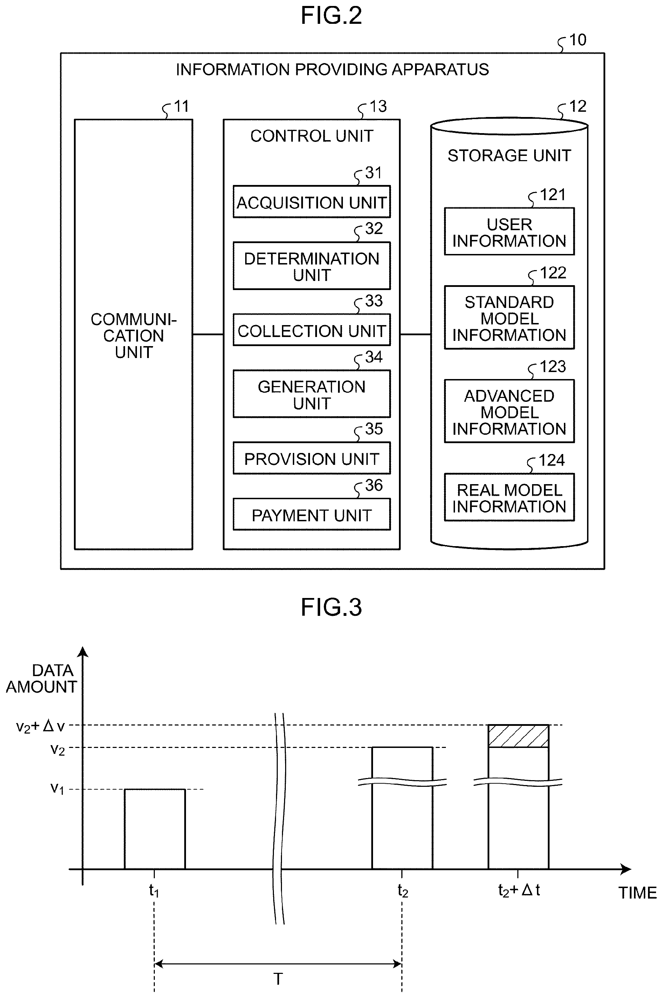

A configuration of the information providing apparatus 10 will be described with reference to FIG. 2. FIG. 2 is a functional block diagram illustrating a configuration example of the information providing apparatus according to the embodiment.

As illustrated in FIG. 2, the information providing apparatus 10 includes a communication unit 11, a storage unit 12, and a control unit 13.

The communication unit 11 transmits and receives information to and from the data source provider 20 or the answer recipient 30 via the network.

The storage unit 12 is implemented by, for example, a semiconductor memory element such as a random-access memory (RAM) or a flash memory, or a storage device such as a hard disk drive (HDD), a solid-state drive (SSD), or an optical disk. The storage unit 12 stores various programs, various data, and the like. The storage unit 12 includes user information 121, standard model information 122, advanced model information 123, and real-time model information 124.

The user information 121 is information on a plan to which each user subscribes. For example, the user information 121 is information in which an ID of a user is associated with a premium plan or a freemium plan.

The standard model information 122, the advanced model information 123, and the real-time model information 124 are information such as parameters for constructing a standard model, an advanced model, and a real-time model, respectively. Parameters for constructing the model are, for example, weights and biases of a neural network. In the learning of the model, these parameters are updated.

The control unit 13 is a controller, and includes, for example, a microcomputer including a central processing unit (CPU), a read-only memory (ROM), a RAM, an input/output port, and the like, and various circuits. Furthermore, the control unit 13 may include, for example, hardware such as an integrated circuit such as an application specific integrated circuit (ASIC) or a field programmable gate array (FPGA). The control unit 13 includes an acquisition unit 31, a determination unit 32, a collection unit 33, a generation unit 34, a provision unit 35, and a payment unit 36.

The acquisition unit 31 acquires information on a provider from the data source provider 20. The information on a provider includes attribute information (business content, business scale, number of employees, number of registered members) on a recipient, information on a region in which a business is conducted, and the like.

The determination unit 32 determines, based on information on the provider, whether the recipient satisfies a condition regarding reliability. For example, the determination unit 32 determines that the condition regarding reliability is satisfied for a provider whose business content is news distribution (newspaper company, communication company, broadcaster, publisher, network news provider). That is, since a data source of a news article provided from a provider whose business content is news distribution has a high degree of reliability, the determination unit 32 determines that the condition regarding reliability is satisfied. Furthermore, the determination unit 32 determines that the condition regarding reliability is satisfied for a provider whose business scale is equal to or larger than a certain scale. The business scale is, for example, the number of distributions of news distribution (the number of copies for a newspaper company, the number of users distributed for a communication company, the viewing rate for a broadcaster, the number of copies for a publisher, the number of distributions or the number of registered users for a network news provider, and the like). That is, the determination unit 32 determines that the condition regarding reliability is satisfied for a provider from which the news article is distributed to a certain number or more of users.

Furthermore, in a case where the data source provider 20 is a device such as the user terminal 20-2 or the vehicle 20-3, the determination unit 32 determines whether a manufacturer of the device satisfies the condition regarding reliability. For example, the determination unit 32 determines that a manufacturer having sales of a certain level or more satisfies the condition regarding reliability.

In addition, the determination unit 32 determines a degree of reliability of a collected data source. For example, the determination unit 32 determines the degree of reliability based on information of a provider. Specifically, the determination unit 32 determines the degree of reliability based on attribute information on a provider and the type of a data source. For example, the determination unit 32 determines that the degree of reliability is high in a case where an economic-related data source is provided from a provider who mainly broadcasts economic-related news, and determines that the degree of reliability is low in a case where a data source other than the economic-related data source is provided. Note that a degree of reliability is not limited to a binary of high/low, and may be expressed by a score of 10 levels from 1 to 10. Furthermore, the determination unit 32 may determine that a data source provided from a provider whose business scale is a certain level or more has a high degree of reliability. The business scale is, for example, the number of distributions of news distribution (the number of copies for a newspaper company, the number of users distributed for a communication company, the viewing rate for a broadcaster, the number of copies for a publisher, the number of distributions or the number of registered users for a network news provider, and the like). Furthermore, the determination unit 32 may determine, based on a degree of reliability of a data source provided in the past from the provider, a degree of reliability of a data source provided this time. Specifically, in a case where the degree of reliability of all the data sources provided in the past from the provider is high, the determination unit 32 determines that the degree of reliability of the data source provided this time is high. Furthermore, in a case where a degree of reliability of all the data sources in a specific field among the data sources provided in the past from the provider is high, the determination unit 32 determines that the degree of reliability is high in a case where the data source provided this time is in the specific field.

The collection unit 33 collects data sources from the data source provider 20 determined by the determination unit 32 as a provider satisfying the condition regarding reliability. The collection unit 33 accumulates the collected data source in the storage unit 12. In addition, the collection unit 33 continuously collects data sources asynchronously with the operation of other processing units. That is, the collection unit 33 continues to collect data sources asynchronously with processing such as model training, and generation and provision of answers.

The amount of data accumulated in the storage unit 12 by the collection unit 33 changes as time elapses, as illustrated in FIG. 3. FIG. 3 is a diagram for description of a change in a data amount.

The horizontal axis in FIG. 3 represents time (the time). The vertical axis in FIG. 3 represents a data amount. A data amount at a current time t₂ is v₂. In addition, a data amount at a time t₁ in the past from the time t₂ by a period T is v₁. Further, v₁ is smaller than v₂.

In addition, learning of an advanced model is performed at time t₂, and the time at which an answer is generated using the learned advanced model is defined as t₂+Δt. Since the collection unit 33 continues to collect data, the data amount increases by Δv during the period of Δt.

The generation unit 34 generates a language model. Specifically, the generation unit 34 generates a standard model and an advanced model. Specifically, the generation unit 34 learns two language models based on the data source. Specifically, the generation unit 34 learns the standard model based on the past data source. In addition, the generation unit 34 learns the advanced model based on the current data source.

In addition, the generation unit 34 updates parameters of a model by learning. The generation unit 34 may re-generate a model at each learning timing or may reflect a data source of a difference from previous learning in the model.

Furthermore, the generation unit 34 determines the degree of reliability of the data source collected from the provider, and determines, based on the degree of reliability, whether to use the data source for learning of the language model. For example, the generation unit 34 analyzes (text analysis, voice analysis, image analysis) a content of the data source, and in a case where there is a possibility that the content of the data source is false, the data source is prohibited from being used for learning of the language model.

Furthermore, when learning the advanced model, the generation unit 34 learns data source acquired during a predetermined period of time using data source in which the degree of reliability determined in Step S4 satisfies a predetermined condition. Specifically, the generation unit 34 learns the advanced model using a data source having a high degree of reliability.

Furthermore, the generation unit 34 receives, from a user who is a recipient of an answer, designation of a provider prohibited from being adopted for learning of the language model, learns a data source of a provider other than the designated provider, and generates a language model for each user.

For example, when receiving, from the user, designation of prohibiting the use of a data source of a company A for learning, the generation unit 34 learns a data source of a provider other than the company A. As a result, the generated language model is a language model dedicated to a user whose designation has been accepted. That is, when the user inputs a prompt, the prompt is input into the language model dedicated to the user to generate an answer. As a result, the answer generated from the language model can be made without including a data source of a provider prohibited by the user. As a result, for example, it is possible to provide an answer that does not include a data source from a provider that does not match the preference of a user or a data source from a provider whose data source is not trusted by a user. That is, according to the generation unit 34, it is possible to provide appropriate information tailored to a user (customer).

Note that the generation unit 34 may set, as a condition for generating such a language model for each user, whether a user subscribes to a premium plan to be described later as a condition. That is, the generation unit 34 may generate the dedicated language model for the user who has subscribed to the premium plan, and may not generate the dedicated language model for a user who has subscribed to a freemium plan (may use a language model common to users).

Furthermore, when performing learning of the language model common to users, the generation unit 34 may adjust, based on a reception result of the designation, which is received from the user, of a provider prohibited from being adopted for learning of the language model, a learning amount for each provider in the language model for providing an answer to the user who has subscribed to the freemium plan.

For example, regarding a provider having a large number of users (the number of users) who has designated the provider as a prohibited provider for learning of the language model, the generation unit 34 reduces the learning amount when learning the data source provided by the provider in the language model common to users. On the other hand, regarding a provider having a small number of users (the number of users) who has designated the provider as a prohibited provider for learning of the language model, the generation unit 34 increases the learning amount when learning the data source provided by the provider in the language model common to users. Note that, as the learning amount, for example, an amount corresponding to a designated number (the number of users) may be determined. Furthermore, the generation unit 34 may prohibit a provider whose designated number (the number of users) is equal to or greater than a predetermined number from being adopted for learning of the language model. Furthermore, the generation unit 34 may exclude (cancel the contract as a provider), from a data source recipient, a provider whose designated number (the number of users) is equal to or greater than a predetermined number.

That is, as the number of designations of prohibiting a provider from being adopted for learning of the language model is larger, the generation unit 34 determines that a degree of reliability of a provider, receiving from a user, is low and reduces a learning amount. Conversely, as the number of designations of prohibiting a provider from being adopted for learning of the language model is smaller, the generation unit determines that a degree of reliability of a provider, receiving from a user, is high and increases a learning amount. In this manner, by performing learning of the language model common to the users using a reception result of the designation of a provider prohibited from being adopted for learning of the language model, it is possible to increase a degree of reliability of an answer provided by the language model. That is, according to the generation unit 34, information having a higher degree of reliability can be provided to the user.

Furthermore, the generation unit 34 adjusts, based on a use situation of a user with respect to a service provided by a provider, a learning amount for each provider in a language model. Specifically, the generation unit 34 adjusts the learning amount for each provider in the language model, based on the number of users registered in the service, the number of times of use of the service, and the use frequency (time or number of times). For example, the generation unit 34 makes a learning amount of a data source provided by a provider having a large number of users registered in the service, a large number of times of use of the service, and a high frequency of use of the service larger than a learning amount of data sources provided by other providers. Note that the learning amount may be determined according to the number of users registered in the service, the number of times of use of the service, and the frequency of use of the service. That is, as a use situation of a service of a provider is better, the generation unit 34 determines that a degree of reliability of a data source provided by the provider is higher and increases a learning amount. As a result, a degree of reliability of an answer provided by the language model can be increased. That is, according to the generation unit 34, information having a higher degree of reliability can be provided to the user.

In addition, the generation unit 34 uses distribution data included in the data source and comment data for model learning. Since the comment data may include supplementary information of the distribution data, more detailed information, information from another viewpoint, and the like, accuracy of the answer output from the model can be further improved by using such comment data for learning.

Furthermore, the generation unit 34 learns a model based on a comment (positive comment) having a positive content and a comment (negative comment) having a negative content in the comment data. The comment having a positive content is a comment that praises, approves, affirms, or supplements distribution data. The comment having a negative content is a comment that criticizes, opposes, or denies distribution data, a comment including radical words, or a comment having a discriminatory content.

For example, the generation unit 34 prohibits, among the comment data, the use of the negative comment in the model learning. As a result, since an answer based on the negative comment can be prevented from being output from the model, it is possible to reduce discomfort felt by the user who receives the answer.

Furthermore, in a case where the number of comments in comment data is equal to or greater than a threshold value, the generation unit 34 uses the comment data for learning of the model. That is, the generation unit 34 determines, for each distribution data, whether the number of comments on comment data is equal to or greater than a threshold value, and uses the distribution data and the comment data for learning of the model in a case where the number of comments is equal to or greater than the threshold value. Conversely, the generation unit uses only the distribution data for learning in a case where the number of comments is less than the threshold value. As a result, it is possible to avoid a situation in which diversity of comments cannot be secured due to a small number of comments.

Furthermore, the generation unit 34 adjusts the learning amount for the model based on the number of positive comments and the number of negative comments in the number of comments. For example, in a case where the ratio of the negative comment among all the comments in the comment data is equal to or greater than a threshold value, the generation unit 34 prohibits the use of all the comments or the negative comment for learning of the model.

In addition, the generation unit 34 makes the learning amount of distribution data in which, among all the comments in the comment data, the ratio of the positive comment is higher than the ratio of the negative comment larger than that of distribution data in which, among all the comments in the comment data, the ratio of the positive comment is lower than the ratio of the negative comment. For example, in the case of distribution data in which the ratio of the positive comment is lower than the ratio of the negative comment, the generation unit 34 does not use a content related to the negative comment in the distribution data for learning of the model.

In addition, the generation unit 34 excludes, from a collection target of the data source, a provider in which the number of distribution data, the comment including the negative content of which is equal to or greater than a threshold value, is equal to or greater than a predetermined number. As a result, since it is possible to exclude a provider who distributes many distribution data including many negative comments, in other words, a provider who distributes distribution data having low reliability, from a collection target of the data source, it is possible to improve the reliability of the data source to be collected.

By using the generated language model, the provision unit 35 generates and provides an answer to a prompt received from a user.

The provision unit 35 refers to the user information 121 and determines the plan of the user. The provision unit 35 determines whether the user has subscribed to a premium plan or the freemium plan.

The provision unit 35 inputs a prompt to the language model and generates an answer. The provision unit 35 generates the answer to the prompt input by the user by using any one of a plurality of language models in which the amounts of data sources used for learning are different from each other. For example, the provision unit 35 generates an answer using either a standard model or an advanced model.

The provision unit 35 provides the user with the answer generated by the language model together with information indicating a provider of the data source used for learning of the language model used for generating the answer. For example, the provision unit 35 causes the user terminal to display an information provision screen. For example, the provision unit 35 may receive a prompt and may provide an answer via a user interface in a chat format. Furthermore, in a case where the answer recipient 30 is the vehicle 30-2, the provision unit 35 displays the answer on, for example, a display (for example, a navigation device or the like) mounted on the vehicle 30-2. Alternatively, in a case where the prompt is an automatic driving request to a destination, the provision unit 35 controls a control device of the vehicle 30-2 to perform automatic driving.

In a case where the answer related to the data source is provided to the user, the payment unit 36 pays a reward to the data source provider 20 of the data source. For example, the payment unit 36 determines a content of the reward to be paid according to the number of times (or the number of users) that answers related to the data source have been made. Furthermore, the payment unit 36 may make a reward different between provision by the standard model and provision by the advanced model. For example, the payment unit 36 makes a reward in a case where the answer related to the data source is provided via the advanced model larger than a reward in a case where the answer is provided via the standard model.

In addition, the payment unit 36 pays a reward according to the degree of reliability determined in Step S4. For example, the payment unit 36 pays a larger reward as the degree of reliability is higher. Furthermore, the payment unit 36 may determine a reward to be paid based on the degree of reliability of a plurality of data sources provided to the user in the past. Specifically, the payment unit 36 pays more reward as there are more data sources having a higher degree of reliability in the data sources provided within the past predetermined period.

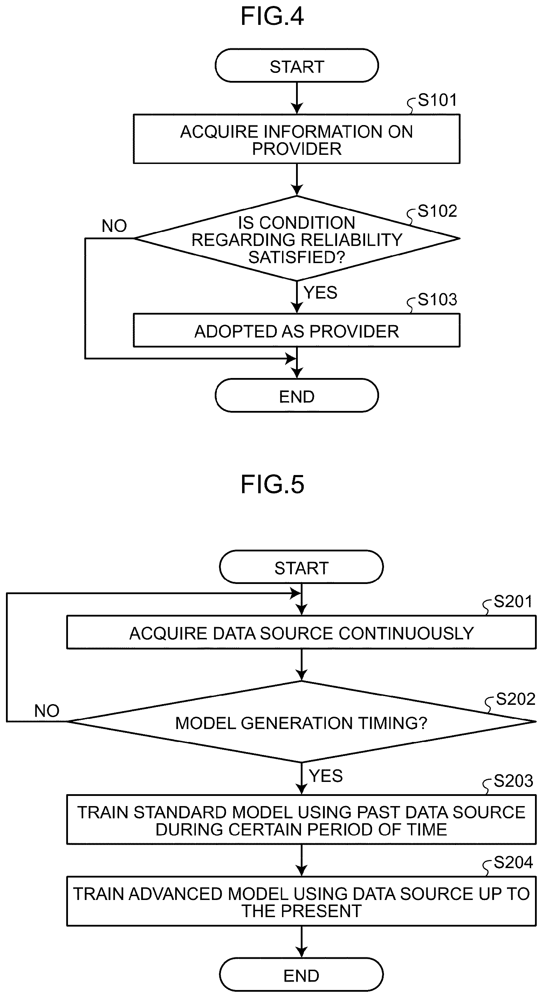

A flow of reliability determination processing will be described with reference to FIG. 4. FIG. 4 is a flowchart for description of a flow of the reliability determination processing.

As illustrated in FIG. 4, the information providing apparatus 10 acquires information on a provider from a data source provider 20 (Step S101).

Subsequently, the information providing apparatus 10 determines, based on information regarding the provider, whether a condition regarding reliability is satisfied (Step S102).

In a case where the condition regarding reliability is satisfied (Step S102: Yes), the information providing apparatus 10 adopts the provider as a provider of the data source (Step S103), and ends the processing. On the other hand, in a case where the condition regarding reliability is not satisfied (Step S102: No), the information providing apparatus 10 ends the processing without adopting the provider as a provider of the data source.

A flow of pre-training processing will be described with reference to FIG. 5. FIG. 5 is a flowchart for description of the flow of pre-training processing.

As illustrated in FIG. 5, the information providing apparatus 10 continuously acquires a data source (Step S201). Next, the information providing apparatus 10 determines whether it is a model generation timing (Step S202).

When it is not the model generation timing (Step S202: No), the information providing apparatus 10 returns to Step S201 and continuously acquires the data source. On the other hand, when it is the model generation timing (Step S202: Yes), the information providing apparatus 10 proceeds to Step S203.

The information providing apparatus 10 trains a standard model using a past data source only during a certain period of time (Step S203). In addition, the information providing apparatus 10 trains an advanced model using a data source up to the present (Step S204). For example, the information providing apparatus 10 trains an advanced model by using a data source up to the present and trains a standard model by using a data source up to 2 years ago.

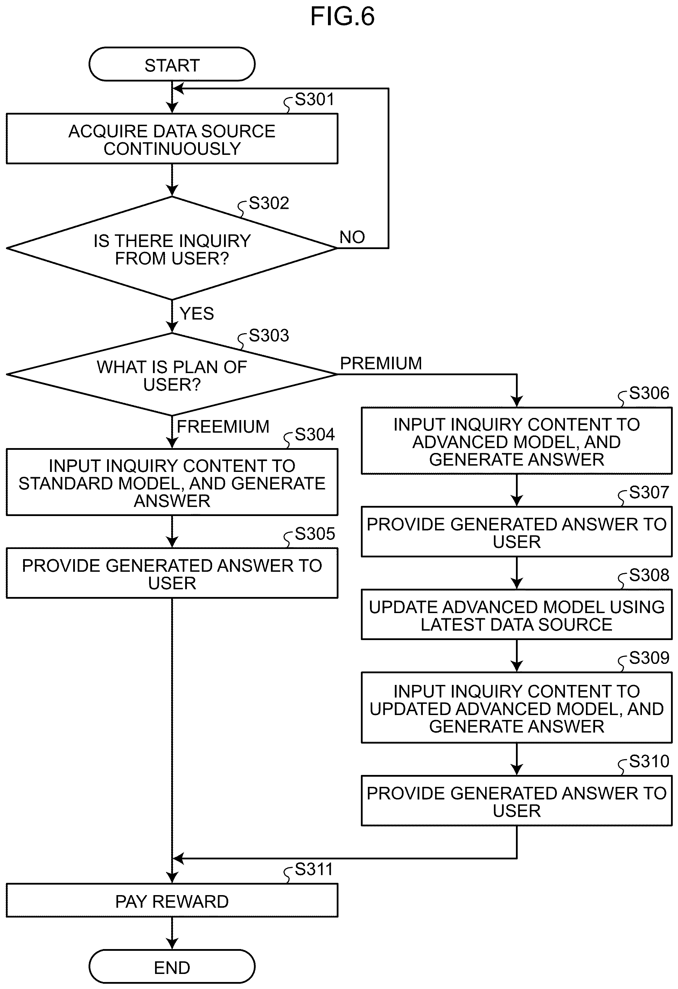

A flow of information providing processing will be described with reference to FIG. 6. FIG. 6 is a flowchart for description of a flow of the information providing processing. The information providing apparatus 10 can execute the pre-training processing and the information providing processing in parallel.

As illustrated in FIG. 6, the information providing apparatus 10 continuously acquires a data source (Step S301). The information providing apparatus 10 determines whether there is an inquiry from a user (Step S302).

In a case where there is no inquiry from the user (Step S302: No), the information providing apparatus 10 returns to Step S301 and continuously acquires the data source. On the other hand, in a case where there is an inquiry from the user (Step S302: Yes), the information providing apparatus 10 determines a plan of the user (Step S303).

In a case where the plan of the user is a freemium plan (Step S303: freemium), the information providing apparatus 10 proceeds to Step S304. On the other hand, in a case where the plan of the user is a premium plan (Step S303: premium), the information providing apparatus 10 proceeds to Step S306.

In Step S304, the information providing apparatus 10 inputs an inquiry content to a standard model and generates an answer. Then, the information providing apparatus 10 provides the generated answer to the user (Step S305). Then, the information providing apparatus 10 pays a reward to a provider of the data source related to the answer (Step S311), and ends the processing.

In Step S306, the information providing apparatus 10 inputs an inquiry content to the advanced model and generates an answer. Then, the information providing apparatus 10 provides the generated answer to the user (Step S307).

Further, the information providing apparatus 10 updates the advanced model using the latest data source (Step S308). The information providing apparatus 10 inputs an inquiry content to the updated advanced model (real-time model) and generates an answer (Step S309). The information providing apparatus 10 provides the generated answer to the user (Step S310).

According to the present embodiment, by forming a partner with a company generally recognized as an excellent company and using such a company as a provider of a data source, reliability of a service that provides an answer using a language model can be improved.

Furthermore, according to the present embodiment, it is possible to provide a general answer by the freemium plan for individual free members, and to provide a highly accurate answer by the premium plan for individual paid-up members, companies, and public institutions such as governments.

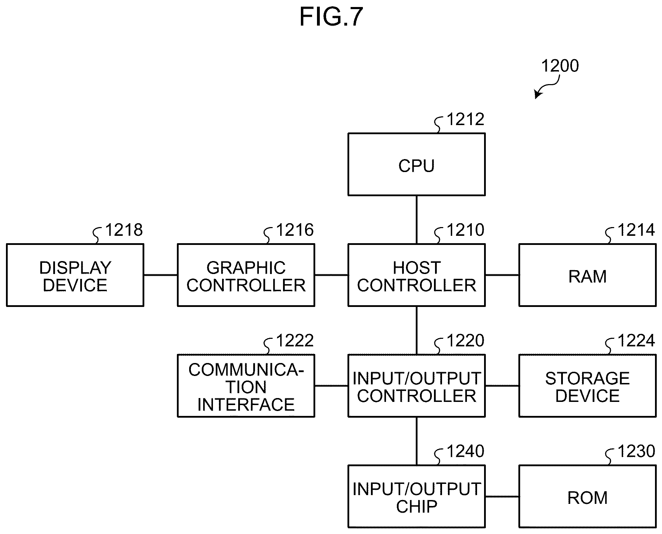

FIG. 7 is a diagram schematically illustrating an example of a computer hardware configuration functioning as an information providing apparatus. A program installed in a computer 1200 can cause the computer 1200 to function as one or more "units" of the apparatus according to the present embodiment, or can cause the computer 1200 to execute an operation associated with the apparatus according to the present embodiment or one or more "units" thereof, and/or can cause the computer 1200 to execute a process according to the present embodiment or a stage of the process. Such programs may be executed by a CPU 1212 to cause the computer 1200 to execute certain operations associated with some or all of the blocks in the flowcharts and block diagrams described herein.

The computer 1200 according to the present embodiment includes the CPU 1212, a RAM 1214, and a graphic controller 1216, which are mutually connected to each other by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid-state drive, or the like. The computer 1200 also includes input/output units such as a ROM 1230 and a keyboard, which are connected to the input/output controller 1220 via an input/output chip 1240.

The CPU 1212 operates according to a program stored in the ROM 1230 and the RAM 1214, thereby controlling each unit. The graphic controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads programs or data from a DVD-ROM or the like and provides the programs or data to the storage device 1224. The IC card drive reads programs and data from the IC card and/or writes the programs and data to the IC card.

The ROM 1230 stores therein a boot program executed by the computer 1200 at the time of activation and/or a program dependent on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, is installed in the storage device 1224, the RAM 1214, or the ROM 1230, which are also examples of a computer-readable storage medium, and is executed by the CPU 1212. The information processing described in these programs is read by the computer 1200 and provides cooperation between the programs and the various types of hardware resources. The apparatus or method may be configured by implementing operation or processing of information according to use of the computer 1200.

For example, when communication is performed between the computer 1200 and an external device, the CPU 1212 may execute a communication program loaded in the RAM 1214 and may instruct the communication interface 1222 to perform communication processing based on the processing described in the communication program. Under the control of the CPU 1212, the communication interface 1222 reads transmission data stored in a transmission buffer region provided in a recording medium such as the RAM 1214, the storage device 1224, the DVD-ROM, or the IC card, transmits the read transmission data to the network, or writes reception data received from the network to a reception buffer region or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and may be subjected to information processing. The CPU 1212 may execute various types of processing on the data read from the RAM 1214, including various types of operations, information processing, condition determination, conditional branching, unconditional branching, information retrieval/replacement, and the like, which are described throughout the present disclosure and specified by a command sequence of a program, and may write back the results to the RAM 1214. In addition, the CPU 1212 may search for information in a file, a database, or the like in the recording medium. For example, in a case where a plurality of entries each having an attribute value of a first attribute associated with an attribute value of a second attribute is stored in the recording medium, the CPU 1212 may search for an entry in which the attribute value of the first attribute matches a specified condition from among the plurality of entries, may read the attribute value of the second attribute stored in the entry, and may acquire the attribute value of the second attribute associated with the first attribute satisfying a predetermined condition.

The above-described program or software module may be stored in a computer-readable storage medium on the computer 1200 or in the vicinity of the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the present embodiment may represent stages of a process in which an operation is executed or "units" of an apparatus that are responsible for executing the operation. Specific stages and "units" may be implemented by dedicated circuitry, programmable circuitry provided with computer-readable instructions stored on a computer-readable storage medium, and/or a processor provided with computer-readable instructions stored on a computer-readable storage medium. The dedicated circuit may include a digital and/or analog hardware circuit, and may include an integrated circuit (IC) and/or a discrete circuit. The programmable circuit may include reconfigurable hardware circuitry including, for example, logical products, disjunction, exclusive disjunction, negative logical product, negative logical sum, and other logical operations, flip-flops, registers, and memory elements, such as a field programmable gate array (FPGA) and a programmable logic array (PLA).

A computer-readable storage medium may include any tangible device capable of storing instructions for execution by a suitable device. As a result, a computer-readable storage medium having the instructions stored therein includes an article of manufacture including instructions that may be executed to create means for execution of the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer readable storage medium may include a Floppy(registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disk (DVD), a Blu-Ray (registered trademark) disk, a memory stick, an integrated circuit card, and the like.

The computer-readable instructions may include either a source code or an object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages such as a "C" programming language or a similar programming language.

Computer readable instructions may be provided to a processor of a general purpose computer, a special purpose computer, or other programmable data processing devices, or may be provided, locally or via a local area network (LAN) and a wide area network (WAN) such as the Internet, to a processor of a general purpose computer, a special purpose computer, or other programmable data processing devices, or a programmable circuitry such that the programmable circuitry executes the computer readable instructions to generate a means that executes the operations designated in the flowcharts or block diagrams. Examples of the processor include a computer processor, a processing unit, a microprocessor, a digital signal processor, a controller, a microcontroller, and the like.

Although the present invention has been described using the embodiments, the technical scope of the present invention is not limited to the scope described in the above embodiments. It is apparent to those skilled in the art that various modifications or improvements can be made to the above embodiments. It is apparent from the description of the claims that modes to which such modifications or improvements are added can also be included in the technical scope of the present invention.

It should be noted that the execution order of each processing such as operations, procedures, steps, and stages in the devices, systems, programs, and methods indicated in the claims, the specification, and the drawings can be realized in any order unless "before", "prior to", or the like is particularly clearly indicated, and unless the output of the previous processing is used in the later processing. Even though the operation flow in the claims, the specification, and the drawings is described using "first", "next", and the like for convenience, it does not mean that it is essential to perform the operation in this order.

### Reference Signs List

- 10: INFORMATION PROVIDING APPARATUS
- 11: COMMUNICATION UNIT
- 12: STORAGE UNIT
- 13: CONTROL UNIT
- 31: ACQUISITION UNIT
- 32: DETERMINATION UNIT
- 33: COLLECTION UNIT
- 34: GENERATION UNIT
- 35: PROVISION UNIT
- 36: PAYMENT UNIT
- 121: USER INFORMATION
- 122: STANDARD MODEL INFORMATION
- 123: ADVANCED MODEL INFORMATION
- 124: REAL-TIME MODEL INFORMATION

## Claims

1. An information providing apparatus comprising:
a collection unit configured to collect a data source provided from a provider satisfying a condition regarding reliability; and
a generation unit configured to generate a language model generated by learning the collected data source, the language model being configured to generate an answer to a prompt input by a user.

2. The information providing apparatus according to claim 1, further comprising
a determination unit configured to determine, based on information on the provider, whether the condition regarding the reliability is satisfied.

3. The information providing apparatus according to claim 2,
wherein the determination unit is configured to determine, based on attribute information on the provider, whether the condition regarding the reliability is satisfied.

4. The information providing apparatus according to claim 3,
wherein the determination unit is configured to determine, based on a business content of the provider, whether the condition regarding the reliability is satisfied.

5. The information providing apparatus according to claim 3,
wherein the determination unit is configured to determine, based on a business scale of the provider, whether the condition regarding the reliability is satisfied.

6. The information providing apparatus according to claim 1,
wherein the provider is a manufacturer of a device that provides the data source.

7. The information providing apparatus according to claim 6,
wherein the device is a user terminal.

8. The information providing apparatus according to claim 6,
wherein the device is a vehicle.

9. The information providing apparatus according to claim 1, further comprising
a payment unit configured to, when the answer related to the data source is provided to the user, pay a reward to the provider of the data source.

10. The information providing apparatus according to claim 1,
wherein the generation unit is configured to determine a degree of reliability of the data source collected from the provider, and to determine, based on the degree of reliability, whether to use the data source for learning of the language model.

11. An information providing method executed by an information providing apparatus, the information providing method comprising:
a collection step of collecting a data source provided by a provider satisfying a condition regarding reliability; and
a generation step of generating a language model generated by learning the collected data source, the language model being configured to generate an answer to a prompt input by a user.

12. An information providing program causing a computer to execute procedures comprising:
a collection step of collecting a data source provided by a provider satisfying a condition regarding reliability; and
a generation step of generating a language model generated by learning the collected data source, the language model being configured to generate an answer to a prompt input by a user.

13. An information providing apparatus comprising:
a collection unit configured to collect a data source provided from a provider satisfying a condition regarding reliability;
a determination unit configured to determine a degree of reliability of the collected data source;
a generation unit configured to generate a language model generated by learning the collected data source, the language model being configured to generate an answer to a prompt input by a user; and
a payment unit configured to, when the answer related to the data source is provided to the user, pay a reward to the provider of the data source according to the degree of reliability.

14. An information providing apparatus comprising:
a collection unit configured to collect a data source provided from a provider satisfying a condition regarding reliability;
a determination unit configured to determine a degree of reliability of the collected data source; and
a generation unit configured to generate a language model generated by learning the data source, the degree of reliability of which satisfies a predetermined condition, the language model being configured to generate an answer to a prompt input by a user.

15. An information providing apparatus comprising:
a collection unit configured to collect a data source provided from a provider satisfying a condition regarding reliability; and
a generation unit configured to generate a language model generated by learning the collected data source, the language model being configured to generate an answer to a prompt input by a user,
wherein the generation unit is configured to receive, from the user, designation of the provider prohibited from being adopted for learning of the language model, and to learn the data source of the provider other than the designated provider to generate the language model for each of the users.

16. An information providing apparatus comprising:
a collection unit configured to collect a data source provided from a provider satisfying a condition regarding reliability; and
a generation unit configured to generate a language model generated by learning the collected data source, the language model being configured to generate an answer to a prompt input by a user,
wherein the generation unit is configured to receive, from the user, designation of the provider prohibited from being adopted for learning of the language model, and to adjust, based on a reception result of the designation, a learning amount for each provider in the language model for providing the answer to a user other than the user.

17. An information providing apparatus comprising:
a collection unit configured to collect a data source provided from a provider satisfying a condition regarding reliability; and
a generation unit configured to generate a language model generated by learning the collected data source, the language model being configured to generate an answer to a prompt input by a user,
wherein the generation unit is configured to adjust, based on a use situation of the user with respect to a service provided by the provider, a learning amount for each provider in the language model.

18. An information providing apparatus comprising:
a collection unit configured to collect a data source provided from a provider satisfying a condition regarding reliability; and
a generation unit configured to generate a language model generated by learning the collected data source, the language model being configured to generate an answer to a prompt input by a user,
wherein the data source includes distribution data distributed by the provider to a distribution target user and comment data with respect to the distribution data, the comment data being posted by the distribution target user.
